# EUROPEAN PATENT SPECIFICATION

(11) **EP 3 614 477 B1**
(45) Date of publication and mention of the grant of the patent: **20.03.2024**
(21) Application number: 18884222.3
(22) Date of filing: 02.11.2018
(51) Int. Cl.: H01M 10/04, H01M 50/40, H01M 10/0525, H01M 10/0583, H01M 4/13, H01M 50/533

(54) **ELECTRODE ASSEMBLY AND BATTERY INCLUDING THE SAME**
ELEKTRODENANORDNUNG UND DIESE ENTHALTENDE BATTERIE
ENSEMBLE D'ÉLECTRODES ET BATTERIE LE COMPRENANT

(30) Priority: 01.12.2017 KR 20170164358
(43) Date of publication of application: 26.02.2020
(73) Proprietor: LG Energy Solution, Ltd., Seoul 07335 (KR)
(72) Inventor: OH, Sei Woon, Daejeon 34122 (KR); JEONG, Yura, Daejeon 34122 (KR); YOON, Yeo Kyung, Daejeon 34122 (KR)
(74) Representative: Plasseraud IP
(86) International application number: PCT/KR2018/013267
(87) International publication number: WO 2019/107776

(56) References cited:
- EP-A2- 2 833 459
- KR-A- 20170 000 257
- KR-B1- 101 156 344
- KR-B1- 101 345 349
- KR-B1- 101 590 217
- KR-B1- 101 678 537
- US-A- 5 618 318
- US-A1- 2011 143 189
- US-A1- 2012 058 387
- US-A1- 2018 241 071

## Description

### [Technical Field]

### CROSS-REFERENCE TO RELATED APPLICATION

This application claims priority to and the benefit of Korean Patent Application No. 10-2017-0164358 filed in the Korean Intellectual Property Office on December 1, 2017.

The present invention relates to a battery field, and more particularly, to an electrode assembly and a cell including the same.

### [Background Art]

Recently, there has been a growing interest in energy storage technology. Above all, development of a rechargeable battery capable of being easily charged/discharged has been the focus of interest. The rechargeable battery has attracted attention as a new energy source for improving an environmentally-friendly characteristic and energy efficiency in that it is possible to decrease the use of fossil fuel, which is the primary advantage, and a byproduct resulting from the use of energy is not generated at all.

Among the rechargeable batteries widely used now, a lithium ion battery is in the limelight in various fields due to the advantages of having a higher operation voltage and a far higher energy density than the rechargeable batteries in the related art, such as Ni-MH, Ni-Cd and sulfuric acid-lead batteries, which use an aqueous electrolyte solution.

With the development of portable electronic devices such as a mobile phone or laptop computer, demands for the rechargeable battery as an energy source thereof have sharply increased. In recent years, the use of the rechargeable battery as a power source of a hybrid electric vehicle (HEV) and an electric vehicle (EV) has been realized. Accordingly, a lot of research has been conducted on rechargeable batteries capable of meeting various demands, and particularly, demands for lithium rechargeable batteries having a high energy density, and a high discharging voltage and output are increasing.

A battery in the related art is manufactured by alternately stacking electrodes and separators by a lamination or simple stacking process. However, the process directly affects the energy density, and as a result, there may be only a small difference between the sizes of the separator and the electrode.

Accordingly, when there occur thermal contraction, folding, terminal tears, and the like of the battery separator, a negative electrode and a positive electrode may be short-circuited to cause fire or the like.

US 2012/058387 A1, US 5 618 318 A, US 2018/241071, and EP 2 833 459 A2 disclose an electrode assembly comprising an electrode having coated and uncoated portions.

### [DISCLOSURE]

### [Technical Problem]

The present invention has been made in an effort to provide an electrode assembly and a battery including the same having an advantage of preventing a short circuit even though a separator contracts.

### [Technical Solution]

An exemplary embodiment of the present invention provides an electrode assembly as defined in the appended set of claims, the electrode assembly includes a positive electrode having a plurality of positive patterns formed by being pattern-coated with a positive active material at a predetermined interval and including positive uncoated regions where the positive active material is not coated; a negative electrode having a plurality of negative patterns formed by being pattern-coated with a negative active material at a predetermined interval and including negative uncoated regions where the negative active material is not coated; and a separator disposed between the positive electrode and the negative electrode, in which the electrode assembly is formed in a zigzag shape by bending the positive uncoated regions and the negative uncoated regions.

Further, in the electrode assembly, the positive electrode, the separator, and the negative electrode may be sequentially stacked, and the electrode assembly may be formed in the zigzag shape by bending the positive uncoated region and the negative uncoated region.

Further, the electrode assembly has a plurality of first electrode tabs, each one of the positive uncoated regions being coupled to one of the plurality of first electrode tabs; and the electrode assembly has a plurality of second electrode tabs, each one of the negative uncoated regions being coupled to one of the plurality of second electrode tabs.

Further, the positive electrode may be stacked on an upper surface of the separator, and the negative electrode may be stacked on a lower surface of the separator.

Further, the plurality of first electrode tabs and the plurality of second electrode tabs may be disposed at opposite sides to each other.

Another exemplary embodiment of the present invention provides a battery as defined in claim 5, the battery includes a plurality of cells, in which each of the plurality of cells includes an electrode assembly, the electrode assembly includes a positive electrode having a plurality of positive patterns formed by being pattern-coated with a positive active material at a predetermined interval and including positive uncoated regions where the positive active material is not coated, a negative electrode having a plurality of negative patterns formed by being pattern-coated with a negative active material at a predetermined interval and including negative uncoated regions where the negative active material is not coated, and a separator disposed between the positive electrode and the negative electrode, and the electrode assembly is formed in a zigzag shape by bending the positive uncoated regions and the negative uncoated regions.

Further, in the electrode assembly, the positive electrode, the separator, and the negative electrode may be sequentially stacked, and the electrode assembly may be formed in the zigzag shape by bending the positive uncoated region and the negative uncoated region.

Further, the electrode assembly has a plurality of first electrode tabs, each one of the positive uncoated regions being coupled to one of the plurality of first electrode tabs; and the electrode assembly has a plurality of second electrode tabs, each one of the negative uncoated regions being coupled to one of the plurality of second electrode tabs.

Further, the positive electrode may be stacked on an upper surface of the separator, and the negative electrode may be stacked on a lower surface of the separator.

Further, the plurality of first electrode tabs and the plurality of second electrode tabs may be disposed at opposite sides to each other.

### [Advantageous Effects]

According to the exemplary embodiments of the present invention, there are provided an electrode assembly and a battery including the same capable of preventing a short circuit even though a separator contracts.

### [Description of the Drawings]

FIG. 1 is a view illustrating a positive electrode according to an exemplary embodiment of the present invention.
FIG. 2 is a view illustrating a negative electrode according to an exemplary embodiment of the present invention.
FIG. 3 is a view illustrating a folding structure of an electrode assembly according to an exemplary embodiment of the present invention.

### [Mode for Invention]

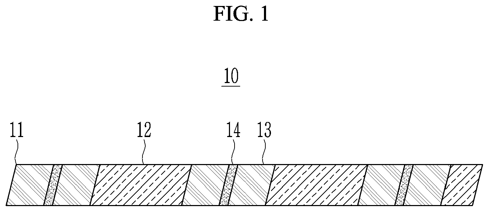

FIG. 1 is a view illustrating a positive electrode according to an exemplary embodiment of the present invention.

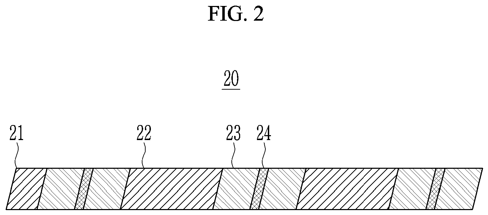

FIG. 2 is a view illustrating a negative electrode according to an exemplary embodiment of the present invention.

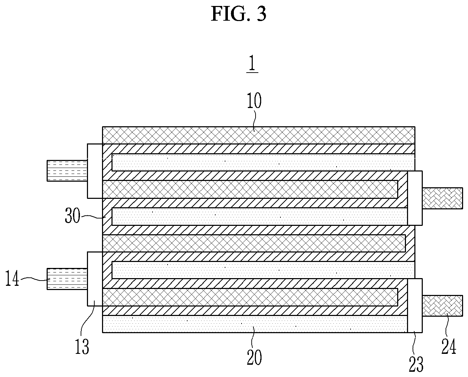

FIG. 3 is a view illustrating a folding structure of an electrode assembly according to an exemplary embodiment of the present invention.

Hereinafter, an electrode assembly 1 according to an exemplary embodiment of the present invention will be described with reference to FIGS. 1 to 3.

Referring to FIG. 1, a positive electrode 10 has a plurality of positive patterns 12 formed by pattern-coating a current collector 11 of a metal thin film shaped like a plate (for example, positive current collector) with a positive active material at a predetermined interval. Positive uncoated regions 13 where the positive active material is not coated are formed between the plurality of positive patterns 12. A first electrode tab (hereinafter, referred to as the "positive tab") 14 may be coupled to the positive uncoated region 13.

Referring to FIG. 2, a negative electrode 20 has a plurality of negative patterns formed by pattern-coating a current collector 21 of a metal thin film shaped like a plate (for example, negative current collector) with a negative active material at a predetermined interval. Negative uncoated regions 23 where the negative active material is not coated are formed between the plurality of negative patterns. A second electrode tab (hereinafter, referred to as the "negative tab") 24 may be coupled to the negative uncoated region 23.

Referring to FIG. 3, in order for the electrode assembly 1 according to the exemplary embodiment to have a structure of the positive electrode 10/the separator 30/the negative electrode 20, the positive electrode 10 is stacked on one surface of the separator 30 (for example, an upper surface of the separator 30) and the negative electrode 20 is stacked on the other surface of the separator 30 (for example, a lower surface of the separator 30), and then the electrode assembly 1 is formed in a zigzag shape by bending the positive uncoated region 13 and the negative uncoated region 23.

The negative uncoated region 23 and the positive uncoated region 13 of the electrode assembly 1 are disposed at opposite sides to each other in a width direction of the electrode assembly 1 (a horizontal direction of FIG. 3). The negative tab 24 and the positive tab 14 coupled to the negative uncoated region 23 and the positive uncoated region 13, respectively, are positioned at the opposite sides to each other.

Accordingly, with the structure of the electrode assembly 1 according to the present invention, even though the separator contracts, it is possible to prevent a short circuit.

In the foregoing, the folding structure of the electrode assembly 1 having the stacking structure of the positive electrode 10/the separator 30/the negative electrode 20 has been described for the convenience of description, but the stacking order of the positive electrode, the separator 30, and the negative electrode of the present invention is not limited thereto.

Hereinafter, a battery including the electrode assembly 1 according to an exemplary embodiment of the present invention will be described in detail.

The battery according to the exemplary embodiment of the present invention includes a plurality of cells, and each of the plurality of cells includes an electrode assembly 1.

The electrode assembly 1 includes a positive electrode 10, a separator 30, a negative electrode 20, a positive tab 14, and a negative tab.

The positive electrode 10 has a plurality of positive patterns 12 formed by pattern-coating a positive current collector 11 shaped like a plate with a positive active material at a predetermined interval. Positive uncoated regions 13 where the positive active material is not coated are formed between the plurality of positive patterns 12. A positive tab may be coupled to the positive uncoated region 13.

The negative electrode 20 has a plurality of negative patterns formed by pattern-coating a negative current collector 21 shaped like a plate with a negative active material at a predetermined interval. Negative uncoated regions 23 where the negative active material is not coated are formed between the plurality of negative patterns. The negative tab may be coupled to the negative uncoated region 23.

In order for the electrode assembly 1 of the battery according to the exemplary embodiment of the present invention to have a structure of the positive electrode 10/the separator 30/the negative electrode 20, the positive electrode 10 is stacked on an upper surface of the separator 30 and the negative electrode 20 is stacked on a lower surface of the separator 30, and then the electrode assembly 1 is formed in a zigzag shape by bending the positive uncoated region 13 and the negative uncoated region 23.

The negative uncoated region 23 and the positive uncoated region 13 of the electrode assembly 1 of the battery according to the exemplary embodiment of the present invention are disposed at opposite sides to each other in a width direction of the electrode assembly 1. The negative tab and the positive tab 14 coupled to the negative uncoated region 23 and the positive uncoated region 13, respectively, are positioned at the opposite sides to each other.

Accordingly, with the structure of the electrode assembly 1 of the battery according to the present invention, even though the separator contracts, it is possible to prevent a short circuit.

## Claims

1. An electrode assembly, comprising:
a positive electrode having a plurality of positive patterns formed by being pattern-coated with a positive active material at a predetermined interval and including positive uncoated regions where the positive active material is not coated;
a negative electrode having a plurality of negative patterns formed by being pattern-coated with a negative active material at a predetermined interval and including negative uncoated regions where the negative active material is not coated; and
a separator disposed between the positive electrode and the negative electrode,
wherein the electrode assembly is formed in a zigzag shape by bending the positive uncoated regions and the negative uncoated regions;
wherein the electrode assembly further has a plurality of first electrode tabs, each one of the positive uncoated regions being coupled to one of the plurality of first electrode tabs; and the electrode assembly further has a plurality of second electrode tabs, each one of the negative uncoated regions being coupled to one of the plurality of second electrode tabs.

2. The electrode assembly of claim 1, wherein:
in the electrode assembly, the positive electrode, the separator, and the negative electrode are sequentially stacked, and the electrode assembly is formed in the zigzag shape by bending the positive uncoated regions and the negative uncoated regions.

3. The electrode assembly of claim 2, wherein:
the positive electrode is stacked on an upper surface of the separator, and the negative electrode is stacked on a lower surface of the separator.

4. The electrode assembly of claim 3, wherein:
the plurality of first electrode tabs and the plurality of second electrode tabs are disposed at opposite sides to each other.

5. A battery including a plurality of cells, wherein:
each of the plurality of cells includes an electrode assembly according to any one of claims 1 to 4.

## Patentansprüche

1. Elektrodenanordnung, welche aufweist:
eine positive Elektrode, die eine Mehrzahl positiver Muster aufweist, die gebildet sind, indem sie mit einem positiven Aktivmaterial an einem vorbestimmten Intervall gemustert beschichtet ist, und positive unbeschichtete Bereiche enthält, die mit dem positiven Aktivmaterial nicht beschichtet sind;
eine negative Elektrode, die eine Mehrzahl negativer Muster aufweist, die gebildet sind, indem sie mit einem negativen Aktivmaterial an einem vorbestimmten Intervall gemustert beschichtet ist, und negative unbeschichtete Bereiche enthält, die mit dem negativen Aktivmaterial nicht beschichtet sind; und
einen Separator, der zwischen der positiven Elektrode und der negativen Elektrode angeordnet ist,
wobei die Elektrodenanordnung durch Biegen der positiven unbeschichteten Bereiche und der negativen unbeschichteten Bereiche in einer Zickzackform ausgebildet ist;
wobei die Elektrodenanordnung ferner eine Mehrzahl erster Elektrodenzungen aufweist, wobei ein jeder der positiven unbeschichteten Bereiche mit einer der Mehrzahl erster Elektrodenzungen verbunden ist; und die Elektrodenanordnung ferner eine Mehrzahl zweiter Elektrodenzungen aufweist, wobei ein jeder der negativen unbeschichteten Bereiche mit einer der Mehrzahl zweiter Elektrodenzungen verbunden ist.

2. Die Elektrodenanordnung von Anspruch 1, wobei:
in der Elektrodenanordnung die positive Elektrode, der Separator und die negative Elektrode sequentiell gestapelt sind, und die Elektrodenanordnung durch Biegen der positiven unbeschichteten Bereiche und der negativen unbeschichteten Bereiche der Zickzackform ausgebildet ist.

3. Die Elektrodenanordnung von Anspruch 2, wobei die positive Elektrode auf eine obere Fläche des Separators gestapelt ist, und die negative Elektrode auf eine untere Fläche des Separators gestapelt ist.

4. Die Elektrodenanordnung von Anspruch 3, wobei die Mehrzahl erster Elektrodenzungen und die Mehrzahl zweiter Elektrodenzungen an einander entgegengesetzten Seiten angeordnet sind.

5. Batterie, welche mehrere Zellen enthält, wobei jede der mehreren Zellen die Elektrodenanordnung nach einem der Ansprüche 1 bis 4 enthält.

## Revendications

1. Ensemble d'électrodes, comprenant :
une électrode positive ayant une pluralité de motifs positifs formés en étant appliqués en motifs à l'aide d'un matériau actif positif à un intervalle prédéterminé et comportant des régions non revêtues positives où il n'y a pas de revêtement de matériau actif positif ;
une électrode négative ayant une pluralité de motifs négatifs formés en étant appliqués en motifs à l'aide d'un matériau actif négatif à un intervalle prédéterminé et comportant des régions non revêtues négatives où il n'y a pas de matériau actif négatif ; et
un séparateur disposé entre l'électrode positive et l'électrode négative,
dans lequel l'ensemble d'électrodes est formé selon un aspect en zigzag en courbant les régions non revêtues positives et les régions non revêtues négatives ;
dans lequel l'ensemble d'électrodes a en outre une pluralité de premières languettes d'électrodes, chacune des régions non revêtues positives étant couplée à l'une de la pluralité de premières languettes d'électrodes ; et l'ensemble d'électrodes a en outre une pluralité de secondes languettes d'électrodes, chacune des régions non revêtues négatives étant couplée à l'une de la pluralité de secondes languettes d'électrodes.

2. Ensemble d'électrodes selon la revendication 1, dans lequel :
dans l'ensemble d'électrodes, l'électrode positive, le séparateur et l'électrode négative sont empilés de manière séquentielle, et l'ensemble d'électrodes est formé selon l'aspect en zigzag en courbant les régions non revêtues positives et les régions non revêtues négatives.

3. Ensemble d'électrodes selon la revendication 2, dans lequel :
l'électrode positive est empilée sur une surface supérieure du séparateur, et
l'électrode négative est empilée sur une surface inférieure du séparateur.

4. Ensemble d'électrodes selon la revendication 3, dans lequel :
la pluralité de premières languettes d'électrodes et la pluralité de secondes languettes d'électrodes sont disposées au niveau de côtés opposés les unes par rapport aux autres.

5. Batterie comportant une pluralité de cellules, dans laquelle :
chacune de la pluralité de cellules comporte un ensemble d'électrodes selon l'une quelconque des revendications 1 à 4.
